(19) Europäisches Patentamt / European Patent Office / Office européen des brevets

(11) **EP 4 085 982 A1**

(12) **EUROPEAN PATENT APPLICATION**

(43) Date of publication:
09.11.2022 Bulletin 2022/45

(21) Application number: 21172430.7

(22) Date of filing: 06.05.2021

(51) International Patent Classification (IPC):
*B01D 21/28* (2006.01)  *G01N 1/00* (2006.01)
*G01N 21/00* (2006.01)

(52) Cooperative Patent Classification (CPC):
**B01D 21/283; G01N 15/1404; B01D 2221/10;**
G01N 2001/4094

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ETH Zurich
8092 Zürich (CH)**

(72) Inventors:
• **GERLT, Michael Sebastian
8006 Zürich (CH)**

• **RUPPEN, Peter
3930 Visp (CH)**
• **DUAL, Jürg
8352 Elsau (CH)**
• **PANKE, Sven
8057 Zürich (CH)**

(74) Representative: **Detken, Andreas
Isler & Pedrazzini AG
Giesshübelstrasse 45
Postfach 1772
8027 Zürich (CH)**

(54) **ACOUSTOFLUIDIC DEVICE AND METHOD FOR TRAPPING PARTICLES IN A FLUID**

(57) An acoustofluidic device and a method for trapping particles with a positive acoustic contrast contained in a moving carrier fluid are disclosed. The device comprises a first channel (11) channelling the moving carrier fluid (14) and a second channel (12). The first channel (11) and a portion (121) of the second channel that is parallel to the first channel (11) are separated by a common separating wall (13). A driving circuitry (31) driving an acoustic transducer (30) is configured to drive the latter at a frequency at which an acoustic radiation force (17) is generated on the particles in the first channel (11) that points towards a displacement antinode of a vibrational eigenmode of the separating wall (13), while at least two counter-rotating streaming vortices (18) are formed by the moving carrier fluid (14) which, in combination with the acoustic radiation force (17), form a particle trap (19) at said displacement antinode of the eigenmode.

FIG. 2

EP 4 085 982 A1

**Description**

TECHNICAL FIELD

The present invention relates to an acoustofluidic device and a method for trapping particles with a positive acoustic contrast contained in a moving carrier fluid.

PRIOR ART

Being able to manipulate small particles contained in a fluid is essential in many situations. One prominent example is the need to transfer cells from their growth medium into a different fluid when preparing them for electroporation. Electroporation is a process that causes pores to form in the cell membrane during an electric shock. Once the pores have formed, genetic material can be delivered into the cell, which is an essential step in many genetic engineering workflows. To be successfully electroporated, cells are briefly exposed to a strong electric field and thus need to be suspended in a low-conductivity medium to prevent strong currents and subsequent Joule heating that would impact cell viability. This requirement is in strong contrast to growth media, where dissolved salts and other charged molecules required for cell growth lead to high electric conductivity. Therefore, medium exchange is an indispensable preparatory step for each form of transformation, and protocols for preparing competent cells usually include cumbersome and time-consuming centrifugation-based washing steps.

Several methods have been developed for continuous medium exchange in microfluidic systems. These methods are based on particle trapping, dragging particles through a liquid interface, continuous buffer exchange, droplet merging, and fluid relocation. The forces utilized to achieve medium exchange are manifold. The most commonly used forces are dielectric, magnetic, hydrodynamic, and acoustic.

The contactless manipulation of particles using acoustic forces, acoustophoresis, is one of the most used techniques for particle manipulation because it is non-invasive, label-free, flexible in design, and biocompatible. Acoustophoresis is based on acoustic radiation forces and drag forces from acoustic streaming. Acoustic radiation forces result from scattering of ultrasonic waves on the surface of a particle. Their magnitude mainly depend on the particle size, the density and compressibility difference between the particle and its surrounding medium, and the amplitude of the acoustic pressure.

In bulk acoustic wave (BAW) devices, an acoustic standing wave is generated in a microfluidic channel by matching the acoustic wavelength in the fluid to the channel dimensions. Particles with positive acoustic contrast, which is typical for biological samples, accumulate in the pressure nodes of a one-dimensional standing wave. This effect can be used for instance to focus a stream of particles into the center of a microfluidic channel.

As an example, WO 2020/047504 A2 discloses an acoustically-driven rapid buffer exchange arrangement for moving cells from a sheath stream containing high conductivity cell buffer to a low conductivity electroporation buffer flowing in the center of the channel. An acoustic transducer is attached to the channel substrate and is configured to create an acoustic field that focuses the stream of particles towards the center of the channel and therefore into the flow region of the low-conductivity electroporation buffer fluid, where they are then collected through an outlet located on the center-line of the channel.

Depending on the application, it may however be favorable to focus the particles towards one of the channel walls instead of the channel center. In the prior art, this has been achieved by changing the acoustic properties of one of the channel walls, as described in the following two examples:

US 2008/0245745 A1 discloses an apparatus for concentrating particles in a fluid. The apparatus includes a flow channel that is defined by a substantially acoustically transparent membrane and preferably an upper surface of a vibration generator. Alternatively, a configuration is also disclosed in which the vibration generator is isolated from the fluid within the channel by an additional layer placed between the vibration generator and the fluid. The vibration generator is capable of producing an acoustic field in the fluid, the acoustic field producing at least one pressure minimum in the fluid. The membrane functions as a pressure release surface, i.e. the reflected wave is 180 degrees out of phase with the incident wave and the pressure wave is 90 degrees out of phase with the displacement wave, which results in a pressure node located at the surface of the membrane. Particles with a positive acoustic contrast are then driven to this pressure node.

US 2013/0043170 A1 discloses a microfluidic particle separator that comprises an acoustic extension structure located proximate to the channel carrying the fluid containing the particles. This acoustic extension structure is used to position at least one pressure node off-center in the particle fluid channel and either consists of a second fluid channel located substantially parallel to the particle fluid channel such that the wall between the two channels is thin enough to be "acoustically transparent", or of a gel positioned adjacent the particle fluid channel.

One major drawback of acoustophoresis is its limitation concerning particle size. The manipulation of particles below a critical particle radius is impeded by the drag force resulting from acoustic streaming. Acoustic streaming is a time-averaged nonlinear viscous effect that originates from the harmonic forcing of the fluid. While the acoustic radiation force scales with $r^3$ ($r$ being the particle radius), the Stokes drag force originating from boundary-driven streaming linearly scales with $r$. Hence, the smaller the particle radius, the stronger the competition between the drag force and the acoustic radiation force.

None of the examples of microfluidic devices mentioned above tackles the issue of trapping small particles for which the drag force cannot be neglected.

To allow for efficient focusing of small particles in a BAW device, US 5,831,166 discloses a way of using burst-mode acoustic excitation to suppress the acoustic streaming field.

Another approach to focus small particles in a moving fluid is to generate an acoustic streaming field that exhibits a particular shape. For instance, an acoustic streaming field exhibiting a single vortex pointing towards the center of a square-shaped channel has been shown by M. Antfolk et al., "Focusing of sub-micrometer particles and bacteria enabled by two-dimensional acoustophoresis", Lab on a chip 14, 2791-2799, (2014), DOI: 10.1039/c4lc00202d, and by Z. Mao et al., "Enriching Nanoparticles via Acoustofluidics", ACS Nano 11(1), 603-612, (2017), DOI: 10.1021/acsnano.6b06784 and is also disclosed in WO 2014/178782 A1.

Alternatively, the acoustic streaming field can also be shaped by tailoring the acoustic impedance gradient as shown by D. Van Assche et al., "Gradient acoustic focusing of sub-micron particles for separation of bacteria from blood lysate", Sci Rep 10, 3670 (2020). DOI: 10.1038/s41598-020-60338-2.

These methods of tailoring the acoustic streaming field disclosed above enable focusing of the particles, but not trapping, i.e. the particles congregate in the channel center, but they still move along with their moving carrier fluid.

To trap sub-micron particles, a technique based on pre-loading larger seed particles in the acoustic trap to enhance trapping via particle-particle interaction has been disclosed by B. Hammarström et al., "Seed particle-enabled acoustic trapping of bacteria and nanoparticles in continuous flow systems", Lab on a Chip 12, 4296-4304, (2012), DOI: 10.1039/c2lc40697g.

SUMMARY OF THE INVENTION

In a first aspect, it is an object of the present invention to provide an acoustofluidic device for trapping particles with a positive acoustic contrast contained in a moving fluid. In particular, the acoustofluidic device of the present invention enables trapping of small particles, such as for instance cells, for which the influence of drag forces resulting from acoustic streaming is not neglectable.

This object is achieved by an acoustofluidic device according to claim 1. Further embodiments of the invention are laid down in the dependent claims.

An acoustofluidic device for trapping particles with a positive acoustic contrast, in particular cells, contained in a moving carrier fluid, is disclosed. The acoustofluidic device comprises:

a first channel for channelling the moving carrier fluid containing the particles;
a second channel, the second channel having a portion that is parallel to the first channel, the first channel and the parallel portion of the second channel being separated by a common separating wall;
an acoustic transducer for exciting an ultrasonic field in the first channel, the ultrasonic field generating an acoustic radiation force on the particles, and for causing the separating wall to vibrate; and
driving circuitry for driving the transducer.

In the acoustofluidic device of the present invention, the driving circuitry is configured to drive the acoustic transducer at a frequency at which the separating wall vibrates with a vibrational eigenmode and at which the acoustic radiation force experienced by the particles with positive acoustic contrast in the first channel points towards a displacement antinode of said eigenmode, the term "displacement antinode" being understood as relating to a portion of the separating wall where the displacement amplitude assumes a local maximum.

In addition, the driving circuitry is configured to drive the acoustic transducer in such a manner that at least two counter-rotating streaming vortices are formed by the moving carrier fluid, which, in combination with the acoustic radiation force, form a particle trap at said displacement antinode of the eigenmode.

While the inventors do not wish to be bound by theory, the following explanations are offered for better understanding of the rationale of the present invention. For a particle in an inviscid fluid, the acoustic radiation force $F_{\text{rad}}$ it is given by the negative gradient of the Gor'kov potential, i.e.

$$F_{\mathrm{rad}} = -\nabla\left(\frac{4}{3}\pi r^3\left(\frac{1}{2}\langle p^2\rangle\frac{f_0}{c^2\rho_f}-\frac{3}{4}\rho_f f_1\langle v^2\rangle\right)\right)$$

with the particle radius $r$, the incident acoustic pressure field $p$, the acoustic velocity field $v$, the fluid speed of sound $c$, the density of the fluid surrounding the particle $\rho_f$ and the monopole and dipole scattering coefficients $f_0$ and $f_1$, which are related to the acoustic contrast factor $\Phi$ as follows:

$$\phi = \frac{1}{3}f_0+\frac{1}{2}f_1 = \frac{1}{3}\left(\frac{5\rho_p-2\rho_f}{2\rho_p-2\rho_f}-\frac{\kappa_p}{\kappa_f}\right),$$

where $\rho_p$ is the density of the particle, $\kappa_p$ is the compressibility of the particle and $\kappa_f$ is the compressibility of the fluid surrounding the particle.

A "particle with positive acoustic contrast" is to be understood as a particle for which the acoustic contrast factor is positive, i.e., $\Phi > 0$.

The angle brackets denote time averaging, i.e.

$$\langle x\rangle = \frac{1}{T}\int_{t_0}^{t_0+T}x\,dt\,,$$

where $T = 1/f$ with $f$ being the acoustic excitation frequency.

Another force that needs to be considered in the acoustofluidic device of the present invention is the drag force caused by acoustic streaming,

$$F_{\mathrm{drag}} = 6\pi\eta r\left(v_{\mathrm{str}}-v_{\mathrm{prt}}\right),$$

with the fluid dynamic viscosity $\eta$, particle radius $r$, streaming velocity $v_{\mathrm{str}}$ and particle velocity $v_{\mathrm{prt}}$.

For particles that experience an acoustic radiation force and a drag force of similar magnitude, a trap may be formed in a region of the fluid where the acoustic radiation force and the drag force point in spatially opposite directions.

On the one hand, the driving circuitry in the microfluidic device of the present invention is configured to drive the acoustic transducer at a frequency at which the Gor'kov potential exhibits a minimum at a displacement antinode of a vibrational eigenmode of the separating wall. In other words, particles with a positive acoustic contrast are pushed towards said displacement antinode of the vibrational eigenmode of the separating wall. On the other hand, the driving circuitry is configured to drive the acoustic transducer in such a manner that at least two counter-rotating vortices are present in the moving carrier fluid in addition to said Gor'kov potential minimum. Without loss of generality, the flow direction of the fluid in the first channel may be designated the x-direction in a Cartesian coordinate system, a direction perpendicular to the separating wall may be designated the lateral direction or y-direction, and a direction perpendicular to both the flow direction x and the lateral direction y may be designated the height direction or z-direction. The rotation direction of each vortex is such that the streaming velocity vectors observed in the yz-plane at the height (with respect to the z-direction) of said displacement antinode of the eigenmode of the vibrating separating wall point away from the separating wall.

This constellation of forces and streaming fields forms a particle trap at said displacement antinode of the vibrational eigenmode of the separating wall.

In advantageous embodiments, the first channel and the second channel may be formed in a common substrate to facilitate device production and handling, the separating wall being formed in one piece with the substrate and extending perpendicular to the substrate plane; i.e., if the substrate plane is the xy-plane, the separating wall extends in the xz-plane.

The first channel and the second channel may be formed by removing material of the substrate, in particular, by etching or micromachining, such that the separating wall exhibits a free-standing end that extends parallel to the substrate plane along the flow direction (x).

Alternatively, the first channel and the second channel may be formed by molding the material of the substrate, such that the separating wall exhibits a free-standing end that extends parallel to the substrate plane along the flow direction (x).

The acoustofluidic device may comprise a cover plate, the cover plate causing the free-standing end of the separating wall to be immobile. By immobilizing the free-standing end of the separating wall, the excitation of a fundamental vibrational eigenmode featuring a displacement antinode at half the separating wall height is facilitated.

In advantageous embodiments, the vibrational eigenmode of the separating wall may exhibit exactly one displacement antinode in z-direction, preferably at half the separating wall height, i.e. the vibrational eigenmode corresponds to the fundamental mode in z-direction, leading to exactly two counter-rotating vortices in the yz-plane and thus the creation of one single trapping region in z-direction.

To enable simple and efficient acoustic excitation, the separating wall may be formed on a first side of the substrate with respect to the substrate plane and the acoustic transducer may be arranged on a second side of the substrate opposite to the first side with respect to the substrate plane.

In order to obtain favorable vibrational patterns of the separating wall, the second channel may have at least one open end, preferably two open ends, enabling pressure compensation of a fluid in the second channel with the environment.

In advantageous embodiments, the second channel may contain a gas, in particular, it may be filled with a gas.

The first channel may comprise two or more inlets for channelling fluid into the first channel. In an advantageous embodiment, the first inlet may be used to channel the carrier fluid into the first channel, while a second inlet may be used to channel a replacement fluid into the first channel.

Preferably, the first and/or the second channel may have an essentially rectangular cross section. In the present context "essentially rectangular" means that the angles between the channel walls may deviate from 90° by the usual unavoidable amount that is caused by the fabrication process, e.g. etching, even when aiming for 90° angles.

In a second aspect, it is an object of the present invention to provide a method for trapping particles with a positive acoustic contrast contained in a moving carrier fluid. The method comprises:

providing a carrier fluid containing particles;
establishing a flow of the carrier fluid through a first channel of an acoustofluidic device, preferably an acoustofluidic device according to the first aspect of the present invention, the acoustofluidic device comprising a second channel, the second channel having a portion that is parallel to the first channel, the first channel and the parallel portion of the second channel being separated by a common separating wall;
driving an acoustic transducer to excite an ultrasonic field in the first channel, the ultrasonic field generating an acoustic radiation force on the particles, and to cause the separating wall to vibrate,
wherein the acoustic transducer is driven at a frequency at which the separating wall vibrates with a vibrational eigenmode and at which the acoustic radiation force experienced by the particles with positive acoustic contrast in the first channel points towards a displacement antinode of said eigenmode,
and wherein the acoustic transducer is driven in such a manner that at least two counter-rotating streaming vortices are formed by the moving carrier fluid which, in combination with the acoustic radiation force, form a particle trap at said displacement antinode of the eigenmode.

The method for trapping particles may further comprise interrupting the flow of the carrier fluid containing the particles, and subsequently establishing a flow of a replacement fluid through the first channel.

The replacement fluid may be supplied to the first channel through the same inlet and/or a different inlet than the carrier fluid containing the particles.

The method may further comprise switching off the acoustic transducer to release the particles while the flow of the replacement fluid through the first channel is maintained.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1    shows, in a schematic top view, a microfluidic device according to a preferred embodiment;
Fig. 2    shows, in a schematic sectional view, the microfluidic device of Fig. 1;
Fig. 3a-b    show, in an enlarged schematic section view, the microfluidic device of Fig. 1;
Fig. 4    shows, in a schematic side view, a preferred method of using a microfluidic device according to the present invention; and
Fig. 5a-c    show, in an enlarged schematic top view, a preferred method of using a microfluidic device according to the present invention.

## DESCRIPTION OF PREFERRED EMBODIMENTS

### Definitions

In the present disclosure, a "carrier fluid" may be any type of fluid that may carry particles. In particular, the carrier fluid may be a growth medium in which cells have been grown.

A "replacement fluid" may be any type of fluid into which the particles need to be transferred. In particular, the replacement fluid may be an aqueous solution with a lower electrical conductivity than the carrier fluid. Specifically, the replacement fluid may be a solution that has an electrical conductivity that is sufficiently low to enable electroporation of a cell in said solution without affecting the viability of the cell.

An "acoustic transducer" may be any type of transducer capable of inducing ultrasonic waves in the first channel and causing the separating wall to vibrate. In particular, the acoustic transducer may be a piezoelectric transducer.

The term "driving circuitry" is to be understood as relating to any device or arrangement of devices that can drive a particular acoustic transducer in such a manner that the transducer induces ultrasonic waves in the first channel and causes the separating wall to vibrate. In particular, the driving circuitry may comprise a function generator generating a periodic voltage signal with an adjustable frequency and may also comprise a voltage amplifier.

### Preferred embodiment

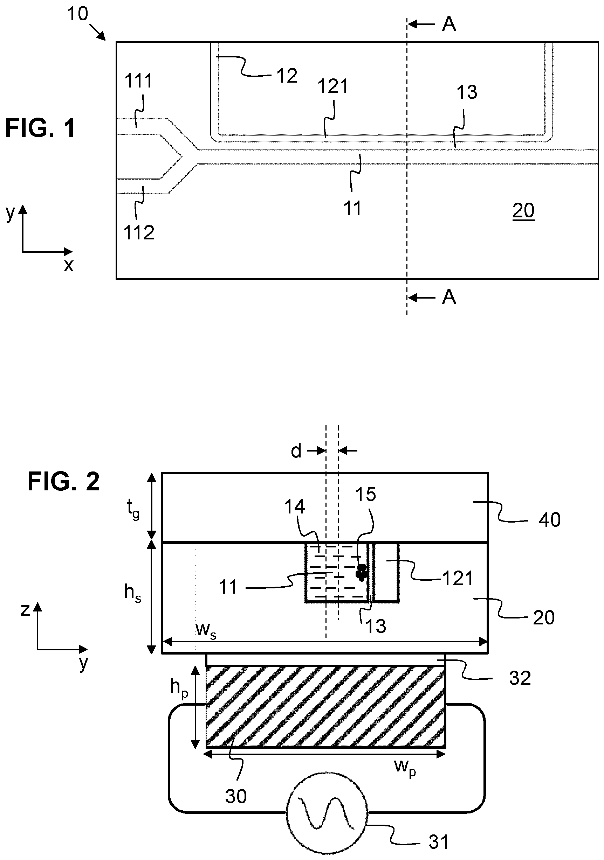

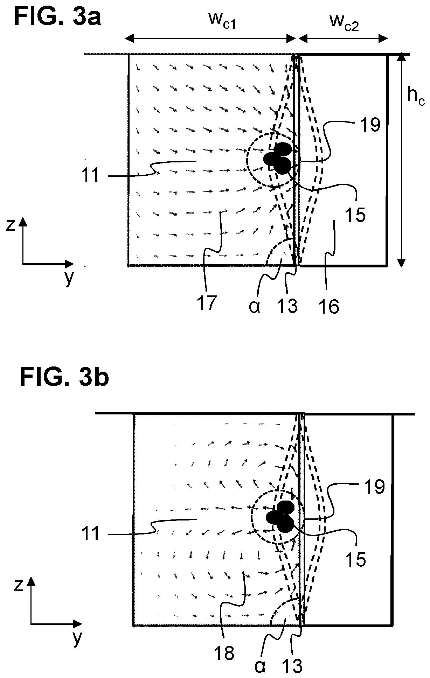

Figures 1 to 5 illustrate an acoustofluidic device according to a preferred embodiment of the present invention. The acoustofluidic device is shown in a highly schematic manner, and it should be understood that the drawings are not to scale. The sectional plane for the sectional views of Figs. 2, 3a and 3b is indicated as plane A-A in Fig. 1.

The acoustofluidic device comprises a channel arrangement 10. The channel arrangement 10 comprises a first channel 11 and a second channel 12. The second channel 12 has a portion 121 that is parallel to the first channel 11. The first channel 11 and the parallel portion 121 of the second channel 12 are separated by a common separating wall 13. The first channel and the parallel portion of the second channel 121 are arranged side-by-side in a common plane, which will in the following be referred to as the substrate plane or xy-plane. Directions are defined as follows: the x-direction extends along the parallel portion of the second channel 121, the y-direction is a lateral direction in the substrate plane perpendicular to the x-direction and the z-direction is a direction perpendicular to both the x-direction and the y-direction. Fig. 1 shows a top view (xy-plane) of a preferred channel arrangement 10.

The first channel has a first inlet 111 and a second inlet 112. The second channel 12 is open on both ends. The channels 11 and 12 are embedded in a substrate 20, specifically, the substrate 20 may be a silicon wafer.

Fig. 2 shows a section view of the acoustofluidic device in the plane A-A in Fig. 1. The center of the first channel 11 may be offset by a distance d in y-direction with respect to the center of the substrate 20. The separating wall 13 is formed in one piece with the substrate 20 and extends along the z-direction in the xz-plane, i.e. perpendicular to the substrate plane. The separating wall 13 is formed on a first side of the substrate 20 and an acoustic transducer 30 is arranged on a second side of the substrate 20 opposite to the first side. The acoustic transducer 30 may be connected to the substrate 20 using a layer of glue 32. The acoustofluidic device further comprises a cover plate 40, which mechanically clamps the free-standing end of the separating wall 13. The cover plate 40 may be a glass wafer that is anodically bonded to the substrate 20. The first channel 11 channels a carrier fluid 14 containing particles 15. The second channel 12 contains a gas 16, specifically, the gas 16 may be air.

The acoustic transducer 30 is driven by a driving circuitry 31. The acoustic transducer 30 excites an ultrasonic field in the first channel 11 and causes the separating wall 13 to vibrate. The ultrasonic field generates an acoustic radiation force 17 on the particles 15. The driving circuitry 31 drives the acoustic transducer 30 at a frequency at which the separating wall 13 vibrates with a vibrational eigenmode that exhibits a displacement antinode. The vibrational eigenmode may exhibit several displacement antinodes in x-direction, but preferably exactly one displacement antinode in z-direction. The displacement antinode is preferably located at half the height of the separating wall 13 (along the z-direction), as schematically shown in Fig. 3a and 3b. The acoustic radiation force 17 experienced by the particles 15 with positive acoustic contrast in the first channel 11 points towards a displacement antinode of said eigenmode when driving the transducer 30 at said frequency. The magnitude and the direction of the acoustic radiation force 17 are schematically depicted by the length and the direction, respectively, of the arrows in Fig. 3a.

In addition, the driving circuitry 31 drives the acoustic transducer 30 in such a manner that at least two counter-rotating streaming vortices 18 are formed by the moving carrier fluid 11 which, in combination with the acoustic radiation force 17, form a particle trap 19 at said displacement antinode of the eigenmode. The magnitude and the direction of the streaming velocity is depicted by the length and the direction, respectively, of the arrows in Fig. 3b.

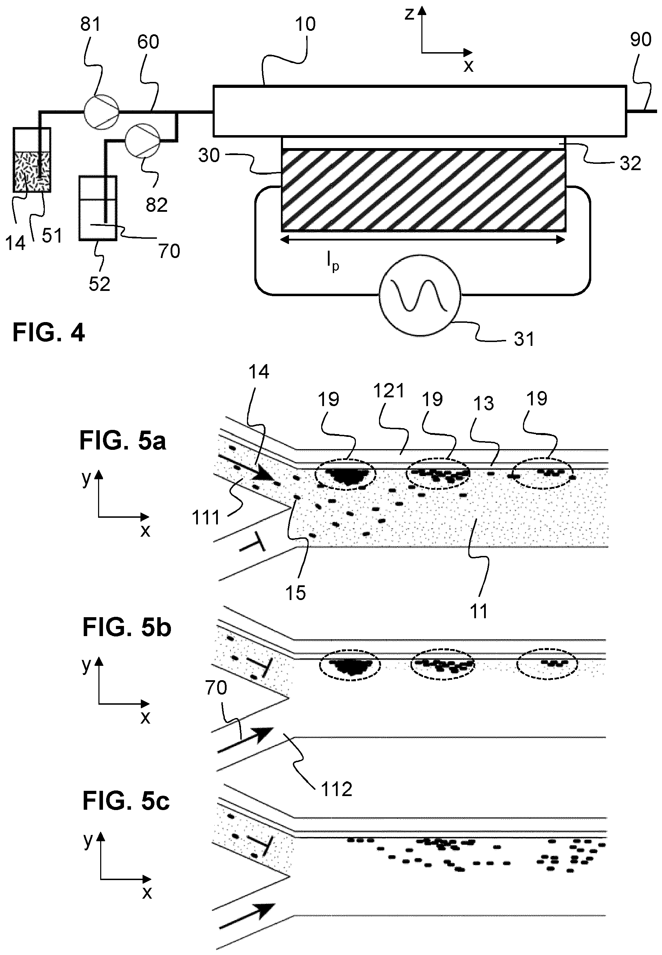

Fig. 4 and Fig. 5 schematically illustrate a preferred method of using the acoustofluidic device 1 for exchanging the fluid around the particles 15.

As can be seen in Fig. 4, a carrier fluid 14 containing the particles 15 is provided in a reservoir 51 and a replacement fluid 70 is provided in a reservoir 52. A fluid supply arrangement 60 connects the reservoirs 51 and 52 with the channel arrangement 10. The supply arrangement 60 may comprise glass capillaries that are inserted into inlet 111 and inlet 112 and fixed with a two-component glue. The fluid supply arrangement 60 may further comprise junctions and/or valves. Flow-generating devices 81 and 82 are provided for establishing a flow of the carrier fluid 14 and the replacement fluid 70, respectively. The flow-generating devices 81 and 82 may be pumps that exert mechanical pressure on the fluid, for instance syringe pumps or peristaltic pumps, or pneumatic pressure sources for creating a pneumatic pressure on a gas in contact with the fluid. The flow-generating device 81 may be based on a different operation principle than the flow-generating device 82.

In a first step of the preferred method, a flow of the carrier fluid 14 containing the particles 15 is established through the first channel 11 using the flow-generating device 81. Preferably, the carrier fluid 14 is entering the first channel 11 through the first inlet 111. The acoustic transducer 30 is driven, using the driving circuitry 31, at a frequency at which the separating wall 13 vibrates with a vibrational eigenmode and at which the acoustic radiation force 17 experienced by the particles 15 in the first channel points 11 towards one or more displacement antinodes of said eigenmode. The acoustic transducer is furthermore driven in such a manner that at least two counter-rotating streaming vortices 18 are formed in the vicinity of each displacement antinode by the moving carrier fluid 14 which, in combination with the acoustic radiation force 17, form a particle trap 19 at said displacement antinode of the eigenmode.

Figs. 5a-c show an excerpt of the channel arrangement 10 viewed from the top. As schematically illustrated in Fig. 5a, the particles accumulate in the traps 19 located at displacement antinodes of the vibrational eigenmode of the separating wall 13.

In a second step of the preferred method, depicted in Fig. 5b, the flow of the carrier fluid 14 containing the particles 15 is interrupted. A flow of the replacement fluid 70 is established through the first channel 11 using the flow-generating device 82. Preferably, the replacement fluid 70 is entering the first channel 11 through the second inlet 112. While the particles 15 remain in the trap 19, the carrier fluid 14 that is still present in the first channel 11 after interruption of the carrier fluid flow is being replaced by the replacement fluid 70.

In a third step of the preferred method, which is preferably executed once the carrier fluid 14 has been completely driven out of the first channel 11, the acoustic transducer 30 is switched off to release the particles 15 while the flow of the replacement fluid 70 through the first channel 11 is maintained.

The replacement fluid 70 containing the particles 15 may then be collected using an outlet arrangement 90, the outlet arrangement 90 may comprise a glass capillary that is inserted into the downstream end of the first channel 11 and fixed with a two-component glue.

Determining the excitation frequency

In acoustofluidics, it is customary to use the acoustic energy density as a benchmark for the performance of a device. The average acoustic energy density ($\bar{E}_{\mathrm{ac}}$) is given as

$$\bar{E}_{\mathrm{ac}} = \frac{1}{V}\int_{V}\left(\frac{1}{2}\rho\langle v^2\rangle + \frac{1}{2}\kappa\langle p^2\rangle\right)dV\,,$$

where V is the volume, $p$ is the incident acoustic pressure field, $v$ is the acoustic velocity field, $\rho$ is the density of the fluid and $\kappa$ is the compressibility. A 2-dimensional numerical model of the cross-section of the channel arrangement 10 as shown in Fig. 2 may be implemented and evaluated using a program operating based on the principle of finite-element-analysis, e.g. COMSOL Multiphysics, to analyze the frequency response of the device. In order to obtain the accurate channel dimensions required for the numerical simulation, the cross-section of the channel arrangement may be evaluated using optical microscopy. To properly predict the acoustic streaming effect, it is recommended to refine the finite-element mesh at the channel edges, i.e. at the fluid-substrate interfaces and at the fluid-cover plate-interfaces, and by that account for the viscous boundary layer. A mesh study may be conducted to determine the converged mesh parameters. Further details regarding the numerical implementation can be found in P. Muller et al., "A numerical study of microparticle acoustophoresis driven by acoustic radiation forces and streaming-induced drag forces", Lab on a Chip 12, 4617-4627, (2012), DOI: 10.1039/C2LC40612H and in T. Baasch et al., "Acoustic radiation force acting on a heavy particle in a standing wave can be dominated by the acoustic microstreaming", Physical Review E 100, 061102, (2019), DOI: 10.1103/PhysRevE.100.061102.

The average acoustic energy density integrated over the cross-section of the first channel 11 and divided by its area may be evaluated as a function of the frequency $f$ at which the transducer 30 is excited. Furthermore, the 2-dimensional numerical model may be used to predict the amplitude of the vibrational eigenmode of the separating wall 13 as a function of the frequency $f$. Maxima in the average acoustic energy density and in the amplitude of the vibrational eigenmode of the separating wall displacement that coincide in terms of their location on the frequency axis indicate resonances of the device. At these resonance frequencies, the acoustic radiation force derived from the Gor'kov potential and the streaming velocity field may be numerically evaluated to verify that:

1. the acoustic radiation force points towards a displacement antinode of the eigenmode of the separating wall (as schematically shown in Fig. 3a)
and that
2. two counter-rotating vortices occur with the rotation direction of each vortex being such that the streaming velocity vectors at the height (in z-direction) of the displacement antinode of the eigenmode of the vibrating separating wall are pointing towards the center of the first channel 11 (as schematically shown in Fig. 3b).

An excitation frequency chosen according to these 2 criteria will lead to the formation of a particle trap at the displacement antinode of the eigenmode of the separating wall. To account for discrepancies between the idealized material parameters used as inputs for the simulations and the real material parameters, the driving circuitry 31 may be configured to sweep the excitation frequency around the numerically determined frequency that fulfills the above-mentioned criteria. Furthermore, the driving circuitry 31 may be configured to adjust the amplitude of the driving signal used to drive the acoustic transducer in order to account for the fact that the acoustic transducer may have an impedance that depends on the excitation frequency. Sweeping the frequency and/or adjusting the amplitude of the driving signal for optimizing particle trapping may be performed experimentally while observing the particle trapping process. The efficiency of the particle trapping process may be evaluated in real-time using a microscope to image the trapping area or by determining the particle concentration in the carrier fluid downstream of the first channel 11 and comparing it to the particle concentration in the carrier fluid upstream of the first channel 11.

Dimensional considerations, material considerations and device fabrication

In a specific embodiment of the present invention, the substrate 20 may consist of silicon and may have a width of $w_s$ = 4 mm and a height of $h_s$ = 500 $\mu$m. Both the first channel 11 and the parallel portion of the second channel 121 have an essentially rectangular cross-section. Both the first channel 11 and the parallel portion of the second channel 121 may have a height of $h_c$ = 200 $\mu$m. The center of the first channel 11 may be offset by a distance d = 200 $\mu$m in y-direction with respect to the center of the substrate 20. The first channel 11 may have a width of $w_{c1}$ = 154 $\mu$m, while the parallel portion of the second channel 121 may have a width of $w_{c2}$ = 150 $\mu$m. The cover plate 40 may consist of glass and may have a thickness of $t_g$ =700 $\mu$m.

The separating wall in this specific embodiment may have a thickness of 4 $\mu$m where the separating wall 13 is connected to the substrate 20 and may have a thickness of 5 $\mu$m where the separating wall 13 is in contact with the cover plate 40. The transducer may be a piezoelectric element (piezo) that may have a length of $l_p$= 10 mm, a height of $h_p$= 0.9 mm and a width of $w_p$= 2 mm and may be driven at a frequency f = 1.8 MHz by a highfrequency amplified AC signal from a wave generator. In a specific method using this specific device for trapping *E.coli* cells, the flow rate of the carrier fluid 14 may be set to 10 $\mu$L/min in the first step of the process, in the second step of the process, the carrier fluid flow may be set to zero and the flow rate of the replacement fluid 70 may be set to 10 $\mu$L/min while still driving the piezo. In the third step of the process, the wave generator driving the piezo is switched off and the flow of the replacement fluid 70 may be set to 20 $\mu$L/min .

In a preferred embodiment, the substrate 20 may consist of silicon and the channel arrangement 10 may be obtained as follows: first, photolithography is used (resist: S1813, Shipley, 4000 rpm; exposure dose: 230 mJ/cm$^2$; developer: AZ 351B, Microchemicals, development time 15 s) to transfer the designs from a chrome mask onto the silicon wafer. Next, the wafer is put into an inductively coupled plasma deep reactive ion etching (ICP-DRIE) machine (Estrellas, Oxford instruments). With a modified high rate process as described by M.S. Gerlt et al., "Reduced etch lag and high aspect ratios by deep reactive ion etching (DRIE)", https://arxiv.org/abs/2104.02763, (2021), a selectivity (ratio of etch rate between photoresist and silicon) of around 350 and straight channel walls with an angle of $\alpha$~89.7° is achieved, where $\alpha$ is defined as the angle in the yz-plane between the substrate plane and the separating wall when the separating wall is not vibrating (see Figs. 3a and 3b).

In further embodiments, the substrate 20 may consist of, but is not restricted to an oxide (e.g. glass), a metal (e.g. steel, tungsten, titanium), an elastomer (e.g. PDMS), a thermoplastic (e.g. PET, PS, COC) or a thermosetting polymer.

Instead of being formed by etching, the channels may be formed by mechanical or optical micromachining or by molding the material of the substrate.

The material of the cover plate 40 is not restricted to glass, but may be any another suitable material or material combination.

Further embodiments of the present invention may exhibit different channel dimensions than the exemplary embodiment described above. The width and height of the first channel may be varied; preferably such that channel cross-section area of the first channel remains between 30000 $\mu m^2$ and 40000 $\mu m^2$. Preferably, the height (i.e. along the z-direction) of the second channel is the same as the height of the first channel. The separating wall may have a different thickness and different wall angles. For a cross-section area of the first channel between 30000 and 40000 $\mu m^2$, the average thickness of the separating wall is preferably <15 $\mu m$, the wall angle $\alpha$ is preferably between 87° and 90° and the length of the separating wall (in x-direction) is preferably between 1 mm and 8 mm. The microfluidic devices according to further embodiments may be operated at a large range of excitation frequencies, typically between 1 kHz - 3 MHz. The optimal excitation frequency depends on the combination of the geometrical dimensions and the choice of material but can always be determined using the combination of numerical and experimental steps described above.

Other modifications

Many modifications of the above-described microfluidic device are possible. For instance, instead of being embedded in the substrate 20, the inlets 111 and 112 may be arranged off the substrate, e.g. they may be formed by a capillary arrangement comprising one or multiple junctions. The number of inlets and outlets is also not limited, and the inlets and outlets may be arranged in all directions of three-dimensional space. The fluids may also be channeled towards and/or off the first channel 11 through the cover plate.

LIST OF REFERENCE SIGNS

| | | | |
|---|---|---|---|
| 10 | channel arrangement | 40 | cover plate |
| 11 | first channel | 51 | reservoir |
| 12 | second channel | 52 | reservoir |
| 13 | separating wall | 60 | supply arrangement |
| 14 | carrier fluid | 70 | replacement fluid |
| 15 | particles | 81 | flow-generating device |
| 16 | gas | 82 | flow-generating device |
| 17 | acoustic radiation force | 111 | inlet |
| 18 | streaming vortices | 112 | inlet |
| 19 | particle trap | 121 | parallel portion of the second channel |
| 20 | substrate | | |
| 30 | acoustic transducer | $\alpha$ | angle |
| 31 | driving circuitry | | |
| 32 | glue layer | | |

**Claims**

1. An acoustofluidic device for trapping particles with a positive acoustic contrast, in particular cells, contained in a moving carrier fluid, comprising:

   a first channel (11) for channelling the moving carrier fluid (14) containing the particles (15);
   a second channel (12), the second channel having a portion (121) that is parallel to the first channel, the first channel (11) and the parallel portion of the second channel (121) being separated by a common separating wall (13);
   an acoustic transducer (30) for exciting an ultrasonic field in the first channel (11), the ultrasonic field generating an acoustic radiation force (17) on the particles (15), and for causing the separating wall (13) to vibrate; and driving circuitry (31) for driving the transducer (30), the driving circuitry (31) being configured to drive the acoustic transducer (30) at a frequency at which the separating wall (13) vibrates with a vibrational eigenmode and at which the acoustic radiation force (17) experienced by the particles (15) with positive acoustic contrast in the first channel (11) points towards a displacement antinode of said eigenmode,
   **characterized in that** the driving circuitry (31) is configured to drive the acoustic transducer (30) in such a manner that at least two counter-rotating streaming vortices (18) are formed by the moving carrier fluid (14) which, in combination with the acoustic radiation force (17), form a particle trap (19) at said displacement antinode of the eigenmode.

2. The acoustofluidic device of claim 1,
wherein the first channel (11) and the second channel (12) are formed in a common substrate (20) defining a substrate plane, the first and the second channel being arranged side-by-side with respect to the substrate plane, the separating wall (13) being formed in one piece with the substrate (20) and extending perpendicular to the substrate plane.

3. The acoustofluidic device of claim 2,
wherein the first channel (11) and the second channel (12) are formed by removing material of the substrate (20), in particular, by etching or micromachining, such that the separating wall (13) exhibits a free-standing end parallel to the substrate plane, or
wherein the first channel (11) and the second channel (12) are formed by molding the material of the substrate (20), such that the separating wall (13) exhibits a free-standing end parallel to the substrate plane.

4. The acoustofluidic device of claim 3,
wherein the acoustofluidic device comprises a cover plate (40), the cover plate (40) causing the free-standing end of the separating wall (13) to be immobile.

5. The acoustofluidic device of claim 4,
wherein the vibrational eigenmode of the separating wall (13) exhibits exactly one displacement antinode in a direction perpendicular to the substrate plane.

6. The acoustofluidic device of any one of the claims 2-5,
wherein the separating wall (13) is formed on a first side of the substrate (20) with respect to the substrate plane and wherein the acoustic transducer (30) is arranged on a second side of the substrate (20) opposite to the first side with respect to the substrate plane.

7. The acoustofluidic device of any one of the preceding claims,
wherein the second channel (12) has at least one open end, preferably two open ends.

8. The acoustofluidic device of any one of the preceding claims,
wherein the first channel comprises two or more inlets (111,112) for channelling fluid into the first channel (11).

9. The acoustofluidic device of any one of the preceding claims,
wherein the first (11) and/or the second channel (12) have an essentially rectangular cross section.

10. The acoustofluidic device of any one of the preceding claims,
wherein the second channel (12) contains a gas (16).

11. A method for trapping particles with a positive acoustic contrast, in particular cells, contained in a moving carrier fluid (14), comprising:

   providing a carrier fluid (14) containing particles (15);
   establishing a flow of the carrier fluid (14) through a first channel (11) of an acoustofluidic device, preferably the acoustofluidic device of any one of the preceding claims, the acoustofluidic device comprising a second channel (12), the second channel having a portion (121) that is parallel to the first channel, the first channel (11) and the parallel portion (121) of the second channel being separated by a common separating wall (13);
   driving an acoustic transducer (30) to excite an ultrasonic field in the first channel (11), the ultrasonic field generating an acoustic radiation force (17) on the particles (15), and to cause the separating wall (13) to vibrate, wherein the acoustic transducer (30) is driven at a frequency at which the separating wall (13) vibrates with a vibrational eigenmode and at which the acoustic radiation force (17) experienced by the particles (15) with positive acoustic contrast in the first channel points towards a displacement antinode of said eigenmode, **characterized in that** the acoustic transducer (30) is driven in such a manner that at least two counter-rotating streaming vortices (18) are formed by the moving carrier fluid (14) which, in combination with the acoustic radiation force (17), form a particle trap (19) at said displacement antinode of the eigenmode.

12. The method for trapping particles of claim 11, further comprising:

interrupting the flow of the carrier fluid (14) containing the particles (15), and
subsequently establishing a flow of a replacement fluid (70) through the first channel (11).

13. The method for trapping particles of claim 12, further comprising:
    supplying the replacement fluid (70) to the first channel (11) through the same inlet (111) and/or a different inlet (112) than the carrier fluid (14) containing the particles (15).

14. The method for trapping particles of claim 12 or 13, further comprising:
    switching off the acoustic transducer (30) to release the particles (15) while the flow of the replacement fluid (70) through the first channel (11) is maintained.

15. The method for trapping particles of any one of claims 12-14, wherein the replacement fluid (70) is a low-conductivity fluid suitable for electroporation.

**FIG. 1**

10

111

112

y

x

12

121

11

13

A

A

20

**FIG. 2**

d

$t_g$

14

15

11

$h_s$

z

y

$w_s$

121

13

40

20

32

$h_p$

$w_p$

30

31

**FIG. 3a**

**FIG. 3b**

**FIG. 4**

**FIG. 5a**

**FIG. 5b**

**FIG. 5c**

EP 4 085 982 A1

EP 4 085 982 A1

EUROPEAN SEARCH REPORT

**Application Number**

EP 21 17 2430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MULLER P B ET AL: "A numerical study of microparticle acoustophoresis driven by acoustic radiation forces and streaming-induced drag forces", LAB ON A CHIP 20121121 ROYAL SOCIETY OF CHEMISTRY GBR, vol. 12, no. 22, 21 November 2012 (2012-11-21), pages 4617-4627, XP002804592, ISSN: 1473-0197 * the whole document * | 1-15 | INV. B01D21/28 G01N1/00 G01N21/00 |
| A | ANTFOLK M ET AL: "Focusing of sub-micrometer particles and bacteria enabled by two-dimensional acoustophoresis", LAB ON A CHIP ROYAL SOCIETY OF CHEMISTRY UK, vol. 14, no. 15, 7 August 2014 (2014-08-07), pages 2791-2799, XP002804593, ISSN: 1473-0197 * the whole document * | 1-15 | |
| X,D | US 2013/043170 A1 (ROSE KLINT A [US] ET AL) 21 February 2013 (2013-02-21) * claims 1-23; figures 1-5b * | 1-15 | TECHNICAL FIELDS SEARCHED (IPC) B01D G01N |

The present search report has been drawn up for all claims

| Place of search | Date of completion of the search | Examiner |
|---|---|---|
| Munich | 25 October 2021 | García Alonso, Nuria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

## ANNEX TO THE EUROPEAN SEARCH REPORT
## ON EUROPEAN PATENT APPLICATION NO.

EP 21 17 2430

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2021

| Patent document cited in search report | Publication date | Patent family member(s) | Publication date |
|---|---|---|---|
| US 2013043170 A1 | 21-02-2013 | US 2013043170 A1<br>US 2014216992 A1<br>US 2015196911 A1 | 21-02-2013<br>07-08-2014<br>16-07-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020047504 A2
- US 20080245745 A1
- US 20130043170 A1
- US 5831166 A
- WO 2014178782 A1

### Non-patent literature cited in the description

- **M. ANTFOLK et al.** Focusing of sub-micrometer particles and bacteria enabled by two-dimensional acoustophoresis. *Lab on a chip,* 2014, vol. 14, 2791-2799
- **Z. MAO et al.** Enriching Nanoparticles via Acoustofluidics. *ACS Nano,* 2017, vol. 11 (1), 603-612
- **D. VAN ASSCHE et al.** Gradient acoustic focusing of sub-micron particles for separation of bacteria from blood lysate. *Sci Rep,* 2020, vol. 10, 3670
- **B. HAMMARSTRÖM et al.** Seed particle-enabled acoustic trapping of bacteria and nanoparticles in continuous flow systems. *Lab on a Chip,* 2012, vol. 12, 4296-4304
- **P. MULLER et al.** A numerical study of microparticle acoustophoresis driven by acoustic radiation forces and streaming-induced drag forces. *Lab on a Chip,* 2012, vol. 12, 4617-4627
- **T. BAASCH et al.** Acoustic radiation force acting on a heavy particle in a standing wave can be dominated by the acoustic microstreaming. *Physical Review E,* 2019, vol. 100, 061102
- **M.S. GERLT et al.** *Reduced etch lag and high aspect ratios by deep reactive ion etching (DRIE),* 2021, https://arxiv.org/abs/2104.02763